# EUROPEAN PATENT APPLICATION

(11) **EP 1 906 481 A1**
(43) Date of publication of application: **02.04.2008**
(21) Application number: 06768198.1
(22) Date of filing: 13.07.2006
(51) Int. Cl.: H01M 10/40, H01G 9/038, H01M 6/16

(54) **NONAQUEOUS ELECTROLYTE SOLUTION AND ELECTROCHEMICAL ENERGY STORAGE DEVICE USING SAME**

(30) Priority: 19.07.2005 JP 2005208300
(71) Applicant: MATSUSHITA ELECTRIC INDUSTRIAL CO., LTD., Osaka 571-8501 (JP)
(72) Inventor: MATSUI, Tooru, c/o Matsushita E.I. Co, Ltd, Chuo-ku, Osaka 540-6207 (JP); DEGUCHI Masaki, c/o Matsushita E.I. Co, Ltd, Chuo-ku, Osaka 540-6207 (JP); YOSHIZAWA Hiroshi, c/o Matsushita E.I. Co, Ltd, Chuo-ku, Osaka 540-6207 (JP)
(74) Representative: Leson, Thomas Johannes Alois
(86) International application number: PCT/JP2006/313990
(87) International publication number: WO 2007/010833

(57) **Abstract**

A non-aqueous electrolyte of the present invention contains a lithium salt (A), a quaternary ammonium salt (B) containing a straight chain alkyl group having carbon atoms of 4 or less and a solvent (C) composed of at least one compound selected from the group consisting of ethylene carbonate, propylene carbonate, butylene carbonate, γ-butyrolactone, dimethyl carbonate, ethyl methyl carbonate, diethyl carbonate, dimethoxyethane, ethoxymethoxyethane and diethoxyethane. The molar ratio C/A of the solvent (C) to the lithium salt (A) or the molar ratio C/B of the solvent (C) to the ammonium salt (B) is 6 or less. The non-aqueous electrolyte has a single phase. Consequently, there can be obtained a non-aqueous electrolyte of a high ion concentration having an excellent oxidation resistance and reduction resistance.

## Description

### Technical Field

The present invention relates to a non-aqueous electrolyte used for an electrochemical energy storage device.

### Background Art

An electric double layer capacitor uses polarizable electrodes for a positive electrode and for a negative electrode, and makes cations and anions in a non-aqueous electrolyte adsorb onto an electrode surface in a charge process to store electrochemical energy. Since the ion concentration in the non-aqueous electrolyte is reduced in the charge process, the resistance inside the electric double layer capacitor is increased. Since the number of ions which can be adsorbed is decreased in using the non-aqueous electrolyte of low ion concentration, the capacity accumulated in the electric double layer capacitor is reduced.
In order to increase the energy density of the electric double layer capacitor, it is necessary to increase the ion concentration in the non-aqueous electrolyte. Since the non-aqueous solvent is used for a solvent dissolving a support salt, the charge voltage of the electric double layer capacitor can be highly set, and the energy density of the capacitor is further increased.

On the other hand, in a non-aqueous electrolyte battery using lithium as an active material, lithium ions move in a non-aqueous electrolyte between a positive electrode and a negative electrode. Herein, the ion concentration in the non-aqueous electrolyte is not changed during the discharge of a primary battery and during the charge and discharge of a secondary battery. In order to increase the energy density of the non-aqueous electrolyte battery, the amount of the positive electrode and negative electrode active materials may be increased and the amount of the non-aqueous electrolyte may be reduced. Since it is necessary to maintain the amount of ions which can move between the positive and negative electrodes while the amount of the non-aqueous electrolyte is reduced, it is necessary to increase the ion concentration in the non-aqueous electrolyte.

The non-aqueous electrolyte is composed of a support salt and a non-aqueous solvent dissolving the support salt.
Typical examples of the non-aqueous solvents include cyclic carbonates such as ethylene carbonate (hereinafter, abbreviated as EC), propylene carbonate (hereinafter, abbreviated as PC), and butylene carbonate (hereinafter, abbreviated as BC); cyclic esters such as γ-butyrolactone (hereinafter, abbreviated as γ-BL); and linear carbonates such as dimethyl carbonate (hereinafter, abbreviated as DMC), ethyl methyl carbonate (hereinafter, abbreviated as EMC) and diethyl carbonate (hereinafter, abbreviated as DEC).

Examples of the support salts include lithium salts such as lithium hexafluorophosphate (LiPF₆), lithium tetrafluoroborate (LiBF₄), lithium perchlorate (LiClO₄), and lithium bis[trifluoromethane sulfonyl]imide (hereinafter, abbreviated as LiTFSI); and ammonium salts such as tetraethylammonium-tetrafluoroborate (hereinafter, abbreviated as TEA-BF₄), and triethylmethylammonium-tetrafluoroborate (hereinafter, abbreviated as TEMA·BF₄).

As the concentration of the salt dissolved in the non-aqueous solvent, for example, the concentration of the lithium salt in the non-aqueous solvent is usually about 0.8 mol/kg. The non-aqueous electrolyte of high ion concentration is limited to, for example, the case where LiBF₄ and EC are mixed in a molar ratio of 1:4 (containing 2.2 mol of LiBF₄ per 1 kg of the non-aqueous electrolyte), and the case where TEMA·BF4 and EC are mixed in a molar ratio of 1:3 (containing 2.1 mol of TEMA·BF4 per 1 kg of the non-aqueous electrolyte).

In order to obtain the electrolyte of higher ion concentration, it is necessary to use ionic liquids which are salts of liquid at ordinary temperatures. For example, Patent Document 1 discloses that 1-ethyl-3-methylimidazolium-tetrafluoroborate (hereinafter, abbreviated as EMI-BF₄) is used as an ionic liquid, and this is mixed with LiBF₄ and EC to prepare a non-aqueous electrolyte. EMI-BF₄ itself is a high ion concentration liquid of 5.1 mol/kg.

Patent Document 2 discloses that N,N-diethyl-N-methyl-N-(2-methoxyethyl)ammonium bis[trifluoromethane sulfonyl]imide (hereinafter, abbreviated as DEME-TFSI) is used as an ionic liquid, and this is mixed with LiTFSI and EC to prepare a non-aqueous electrolyte. DEME-TFSI itself is a high ion concentration liquid containing 2.3 mol per 1 kg of the non-aqueous electrolyte.

On the other hand, Patent Document 3 proposes an electrochemical energy storage device obtained by combining a positive electrode containing activated carbon and a negative electrode containing activated carbon and a carbon material absorbing and releasing lithium. A non-aqueous electrolyte containing the lithium salt and the ammonium salt is used for the device.

In the device of Patent Document 3, lithium ions and ammonium ions are adsorbed onto the activated carbon in the negative electrode while charging, and the lithium ions are absorbed in the carbon material. Therefore, the charge and discharge characteristics at high current are enhanced, and high capacity can be accumulated. There is disclosed an electrolyte containing a quaternary onium salt (a salt composed of cation including N, P, S atoms or the like as a core) of 0.5 to 2.5 mol/L and a lithium salt of 0.5 to 2.0 mol/L. Specifically, only a non-aqueous electrolyte prepared by respectively dissolving LiBF₄ and TEMA·BF₄ in the concentration of 1 mol/L in PC is disclosed. When the concentration of 1 mol/L is converted into molar ratio, it is roughly equivalent to PC/LiBF₄=11/1 and PC/TEMA·BF₄=10/1.
Patent Document 1: Japanese Laid-Open Patent Publication Hei No. 11-260400
Patent Document 2: Japanese Laid-Open Patent Publication No. 2004-146346
Patent Document 3: Japanese Laid-Open Patent Publication No. 2000-228222

### Disclosure of Invention

### Problem To be Solved by the Invention

The ionic liquids of patent documents 1 and 2 have no oxidation resistance and reduction resistance required for the electric double layer capacitor and the non-aqueous electrolyte secondary battery. Since the solubility of the lithium salt is low and the concentration of lithium ions cannot be enhanced, the amount of electrolyte cannot be reduced in the non-aqueous electrolyte secondary battery using lithium as the active material.

When the present inventors examined Patent Document 3 in detail, the inventors found that the lithium ions are not absorbed into the carbon material while charging in the composition of the illustrated electrolyte. This can be presumed also from the charge voltage of the proposed electrochemical energy storage device remaining at 3.2 V in Example of Patent Document 3. When the charge voltage of the device actually is increased, triethylmethyl ammonium ions (hereinafter, abbreviated as TEMA ion) are inserted into the carbon material absorbing and releasing the lithium ions, and PC which is a solvent is decomposed to remarkably generate gas.

In Patent Document 3, a non-aqueous electrolyte prepared by dissolving a quaternary onium salt of 0.5 to 2.5 mol/L and a lithium salt of 0.5 to 2.0 mol/L is described. In using EC for the solvent, TEMA·BF₄ of 2.1 mol (the concentration of TEMA·BF₄ in the electrolyte is about 2.5 mol/L as the calculated value) can be independently dissolved in 1 kg of the electrolyte. In using EC for the solvent, LiBF₄ of 2.2 mol (the concentration of TEMA·BF₄ in the electrolyte is about 2.6 mol/L as the calculated value) can be independently dissolved in 1 kg of the electrolyte. However, Patent Document 3 does not show that the quaternary onium salt and the lithium salt can be simultaneously dissolved at a high ion concentration. As shown in Examples of the present invention to be described later, it has not been known that the electrolyte of a high ion concentration exceeding the solubility of the solvent can be prepared.

Then, the present invention has been accomplished in view of the above conventional problems, and it is an object of the present invention to provide a non-aqueous electrolyte of a high ion concentration having excellent oxidation resistance and reduction resistance.

### Means for Solving the Problem

A non-aqueous electrolyte of the present invention comprises:
a lithium salt (A);
a quaternary ammonium salt (B) containing a straight chain alkyl group having carbon atoms of 4 or less; and
a solvent (C) composed of at least one selected from the group consisting of ethylene carbonate, propylene carbonate, butylene carbonate, γ-butyrolactone, dimethyl carbonate, ethyl methyl carbonate, diethyl carbonate, dimethoxyethane, ethoxymethoxyethane and diethoxyethane, wherein
a molar ratio C/A of the solvent (C) to the lithium salt (A) or a molar ratio C/B of the solvent (C) to the ammonium salt (B) is 6 or less.

The present invention relates to an electrochemical energy storage device comprising:
the above described non-aqueous electrolyte;
a positive electrode; and
a negative electrode.

### Effect of the Invention

According to the present invention, a non-aqueous electrolyte of a high ion concentration in a single phase is obtained by mixing the lithium salt and the ammonium salt in a specific composition. Since the ammonium ions in the ammonium salt contain the straight chain alkyl group, the non-aqueous electrolyte having excellent oxidation resistance and reduction resistance can be obtained.

Therefore, the amount of the electrolyte in the electrochemical energy storage devices such as the electric double layer capacitor and the non-aqueous electrolyte secondary battery can be reduced, and the energy density can be enhanced. Since the non-aqueous electrolyte has excellent oxidation resistance and reduction resistance, the electrochemical energy storage device having a high voltage can be obtained.

### Brief Description of the Drawings

FIG. 1 shows the charge curves of negative electrodes in Example 11 of the present invention and Comparative Example 1;
FIG. 2 shows the charge and discharge curves of a negative electrode in Example 12 of the present invention;
FIG. 3 shows the charge curves of negative electrodes in Example 13 of the present invention and Comparative Example 2;
FIG. 4 shows the charge and discharge curves of a lithium secondary battery in Example 17 of the present invention;
FIG. 5 shows the charge and discharge curves of a lithium secondary battery of Comparative Example 3;
FIG. 6 shows the charge and discharge curves of a negative electrode in Example 14 of the present invention;
FIG. 7 shows the charge and discharge curves of a negative electrode in Example 15 of the present invention; and
FIG. 8 shows the charge and discharge curves of a negative electrode in Example 16 of the present invention.

### Best Mode for Carrying Out the Invention

The present invention relates to a non-aqueous electrolyte comprising a lithium salt (A), a quaternary ammonium salt (B) containing a straight chain alkyl group having carbon atoms of 4 or less and a solvent (C) composed of at least one selected from the group consisting of ethylene carbonate (hereinafter, abbreviated as EC), propylene carbonate (hereinafter, abbreviated as PC), butylene carbonate (hereinafter, abbreviated as BC), γ-butyrolactone (hereinafter, abbreviated as γ-BL), dimethyl carbonate (hereinafter, abbreviated as DMC), ethyl methyl carbonate (hereinafter, abbreviated as EMC), diethyl carbonate (hereinafter, abbreviated as DEC), dimethoxyethane (hereinafter, abbreviated as DME), ethoxymethoxyethane (hereinafter, abbreviated as EME) and diethoxyethane (hereinafter, abbreviated as DEE), wherein the molar ratio (hereinafter, abbreviated as C/A) of the solvent (C) to the lithium salt (A) or the molar ratio (hereinafter, abbreviated as C/B) of the solvent (C) to the ammonium salt (B) is 6 or less, and the non-aqueous electrolyte is a single phase.

As described above, the non-aqueous electrolyte of a high ion concentration in the single phase is obtained by combining the lithium salt, the ammonium salt and the solvent. The non-aqueous electrolyte having an excellent oxidation resistance and reduction resistance is obtained by including the quaternary ammonium salt containing the straight chain alkyl group having carbon atoms of 4 or less. When the number of the carbon atoms of the straight chain alkyl group exceeds 4, ammonium ions are easily inserted between graphite layers in the negative electrode, and thereby the layer structure of graphite is broken to shorten the charge and discharge cycle life of the negative electrode. When the alkyl group has not a straight chain structure but a branch structure such as a secondary or tertiary alkyl group, the ammonium ions are easily oxidized.

TEA-BF₄ often used as the salt of an electrolyte for an electric double layer capacitor is completely dissolved in a molar ratio of EC/TEA-BF₄=7/1 in EC. However, TEA-BF₄ cannot be dissolved in a molar ratio of 6/1, and floats on the upper surface of the electrolyte. However, when the lithium salt is made to coexist, TEA-BF₄ is dissolved, and an electrolyte of high ion concentration in a single phase can be prepared even in a molar ratio of 6/1.
Among the above solvents, cyclic carbonate such as EC is particularly preferable, due to its excellent electrochemical oxidation and reduction resistances.

C/A or C/B is preferably 4 or less. When the ammonium salt is inserted between the layers of graphite used for a negative electrode material, the layered structure may be broken to decrease the amount of lithium ions to be inserted and released. However, even if the ammonium salt exist, the electrochemical absorbing and releasing characteristics of the lithium ions in the graphite are not reduced by using the electrolyte having the above components. This is believed that it is because the dissociation degree of the ammonium salt is reduced to become a cluster and the amount of free ammonium ions is decreased.
Specific examples include an electrolyte prepared by mixing EC, LiTFSI and triethylmethylammonium-bis[trifluoromethane sulfonyl]imide (hereinafter, abbreviated as TEMA·TFSI) in a molar ratio of EC/LiTFSI/TEMA-TFSI=4/1/1.

In a combination in which the molar ratio C/A of the lithium salt and solvent is 6 or less or a combination in which the molar ratio C/B of the ammonium salt and solvent is 6 or less, the single phase cannot be obtained. However, the electrolyte of high ion concentration in the single phase is obtained by setting the molar ratio of C/A or C/B to 6 or less and making the lithium salt and the ammonium salt coexist in the solvent.
In a combination in which the molar ratio C/A of the lithium salt and solvent is 4 or less or a combination in which the molar ratio C/B of the ammonium salt and solvent is 4 or less, the single phase cannot be obtained. However, when the single phase is obtained by setting the molar ratio of C/A or C/B to 4 or less and making the lithium salt and the ammonium salt coexist in the solvent, an electrolyte of a higher ion concentration is obtained.
Specific examples include an electrolyte prepared by mixing DME, LiTFSI and TEMA·TFSI in a molar ratio of DME/LiTFSI/TEMA·TFSI=1/1/1. When DME and LiTFSI are mixed in a molar ratio of DME/LiTFSI=1/1, the electrolyte is a solid at ordinary temperatures.

The anion of the above lithium salt (A) is preferably at least one selected from the group consisting of BF₄⁻, bis[trifluoromethane sulfonyl]imide ion (hereinafter, abbreviated as TFSI ion) and ClO₄⁻. The lithium salt containing BF₄⁻, TFSI ion or ClO₄⁻ as the anion has a larger solubility to a non-aqueous solvent than that of the lithium salt containing PF₆⁻ as the anion.

Main examples of the lithium salts (A) contained in the non-aqueous electrolyte of the present invention include LiBF₄, LiTFSI and LiClO₄. In addition to them, furthermore, there may be used lithium salts such as LiPF₆, lithium bis[pentafluoroethanesulfonyl]imide (hereinafter, abbreviated as LiBETI), lithium[trifluoromethanesulfonyl][nonafluorobutane sulfonyl]imide (hereinafter, abbreviated as LiMBSI), lithium cyclohexafluoropropane-1,3-bis[sulfonyl]imide (hereinafter, abbreviated as LiCHSI), lithium bis[oxalate (2-)]borate (hereinafter, abbreviated as LiBOB), lithium trifluoromethyltrifluoroborate (LiCF₃BF₃), lithium pentafluoroethyltrifluoroborate (LiC₂F₅BF₃), lithium heptafluoropropyltrifluoroborate (LiC₃F₇BF₃), and lithium tris[pentafluoroethyl]trifluorophosphate [Li(C₂F₅) ₃PF₃]. The concentration of the lithium salt in the non-aqueous electrolyte may be determined so that the non-aqueous electrolyte exists stably.
Of the above lithium salts (A), LiPF₆, LiBETI, LiMBSI, LiCHSI, LiBOB, LiCF₃BF₃ and LiC₂F₅BF₃ are particularly preferable.

The quaternary ammonium salt (B) containing the straight chain alkyl group having carbon atoms of 4 or less contained in the non-aqueous electrolyte of the present invention has a structure where each of four groups bonded to N is independently a methyl group, an ethyl group, a propyl group or a butyl group. That is, the above ammonium salt (B) has a structure represented by the general formula: [R₄N]⁺X⁻. In the formula, [R₄N]⁺ is cation; each of four R's is independently a straight chain alkyl group represented by CₙH₂ₙ₊₁ (n = 1 to 4); and X⁻ is anion.

The anion (X⁻) of the above ammonium salt (B) is preferably at least one selected from the group consisting of BF₄⁻, TFSI ion and ClO₄⁻. The ammonium salt containing BF₄⁻, TFSI ion or ClO₄⁻ as the anion has a larger solubility to the non-aqueous solvent than that of the ammonium salt containing PF₆⁻ as the anion.
The cation ([R₄N]⁺) of the above ammonium salt (B) is particularly preferably trimethylpropylammonium ion.

Examples of the above ammonium salts (B) include trimethylethylammonium-tetrafluoroborate (hereinafter, abbreviated as TMEA·BF₄), trimethylpropylammonium-tetrafluoroborate (hereinafter, abbreviated as TMPA·BF₄), TEA·BF₄, TEMA·BF₄, tetrabutylammonium-tetrafluoroborate (hereinafter, abbreviated as TBA·BF₄), TEMA·TFSI, trimethylpropylammonium-bis[trifluoromethane sulfonyl]imide (hereinafter, abbreviated as TMPA·TFSI), and trimethylpropylammonium-perchlorate (hereinafter, abbreviated as TMPA·ClO₄). The concentration of the ammonium salt in the non-aqueous electrolyte may be determined so that the non-aqueous electrolyte exists stably.

Further, the non-aqueous electrolyte may contain cyclic or linear carbonate having a C=C unsaturated bond as an additive agent. Thereby, the charge and discharge cycle characteristics of the electrochemical energy storage device are enhanced. In view of the maintenance of the high ion concentration, in the mixed solvent (C) of these additive agents and above solvent, the amount of the additive agent is preferably adjusted so that the molar ratio C/A or C/B is set to 6 or less.

Examples of the cyclic carbonates having the C=C unsaturated bond include vinylene carbonate (hereinafter, abbreviated as VC), vinylethylene carbonate (hereinafter, abbreviated as Vec), divinylethylene carbonate (hereinafter, abbreviated as DVec), phenylethylene carbonate (hereinafter, abbreviated as Pec), and diphenylethylene carbonate (hereinafter, abbreviated as DPec). Particularly preferred are Vec and Pec.

Examples of the linear carbonates having the C=C unsaturated bond include methylvinyl carbonate (hereinafter, abbreviated as MVC), ethylvinyl carbonate (hereinafter, abbreviated as EVC), divinyl carbonate (hereinafter, abbreviated as DVC), allylmethyl carbonate (hereinafter, abbreviated as AMC), allylethyl carbonate (hereinafter, abbreviated as AEC), diallyl carbonate (hereinafter, abbreviated as DAC), allylphenyl carbonate (hereinafter, abbreviated as APC), and diphenyl carbonate (hereinafter, abbreviated as DPC.) Particularly preferred are DAC, APC and DPC.

The electrochemical energy storage device of the present invention comprises a positive electrode, a negative electrode and the above non-aqueous electrolyte. Examples of the above devices include a lithium primary battery, a lithium secondary battery and an electric double layer capacitor.
In the lithium primary battery, MnO₂ and CFₓ (x = 0.9 to 1.1) or the like are used for a positive electrode material, and lithium metal or the like is used for a negative electrode material.
In the lithium secondary battery, lithium-containing transition metal oxides such as LiCoO₂, LiNiO₂ and LiMn₂O₄ are used for a positive electrode material, and graphite and Li₄Ti₅O₁₂ or the like are used for a negative electrode material.

In the electric double layer capacitor, activated carbon, and conductive compounds capable of absorbing and releasing anion while charging and discharging, represented by polypyrrole, polythiophene, and graphite, are used for a positive electrode material. Activated carbon and conductive polymers such as polyacetylene are used for a negative electrode material. Mixtures and composites of these may be used for the positive electrode material.
The above positive electrode material and negative electrode material may be independently used, and a plurality of materials may be mixed and used.
The graphite as the negative electrode material can absorb and release lithium ions and ammonium ions depending on the composition of the non-aqueous electrolyte.

### Examples

Hereinafter, Examples of the present invention will be described in detail, although the present invention is not limited to the following Examples.
Hereinafter, there are shown Examples in which an electrolyte of a high ion concentration is prepared by making a lithium salt and an ammonium salt coexist.

### <<Example 1>>

EC, LiBF₄ and TEA·BF₄ were mixed in a molar ratio of EC/LiBF₄/TEA·BF₄=6/1/1. As a result, there could be prepared an electrolyte having a total salt concentration of 2.4 mol/kg and having a single phase at ordinary temperatures. The visual observation confirmed that the undissolved salt did not float and the electrolyte was transparent without having muddiness and was a single phase.

When EC and TEA·BF₄ were mixed in a molar ratio of EC/TEA·BF₄=6/1, TEA·BF₄ did not completely dissolve and floated on the upper surface of the solution in an insoluble state. Herein, if TEA·BF₄ is assumed to be completely dissolved, an electrolyte having a salt concentration of 1.3 mol/kg can be obtained. It was found that TEA·BF₄ was easily dissolved by the existence of LiBF₄ and had a salt concentration of at least 1.8 times in the electrolyte.

### <<Example 2>>

γ-BL, LiBF₄ and TEA·BF₄ were mixed in a molar ratio of γ-BL/LiBF₄/TEA·BF₄=4/1/1 and held at 60°C. As a result, there could be prepared an electrolyte having a total salt concentration of 3.1 mol/kg and having a single phase. When γ-BL and TEA·BF₄ were mixed in a molar ratio of γ-BL/TEA·BF₄=4/1, TEA·BF₄ salt did not completely dissolve and floated on the upper surface of the solution in an insoluble state at 60°C. Herein, if TEA·BF₄ is assumed to be completely dissolved, an electrolyte having a concentration of 1.8 mol/kg is obtained. It was found that TEA·BF₄ was easily dissolved by the existence of LiBF₄ and had a salt concentration of at least 1.7 times in the electrolyte.

### <<Example 3>>

EC, LiBF₄ and TEMA·BF₄ were mixed at various rates shown in Table 1. The states of the prepared electrolytes are shown in Table 1. Compositions 1-1, 1-2, 1-8 and 1-9 are Comparative Examples.

**[Table 1]**

| Composition number | Composition EC/LiBF₄/TEMA·BF₄ (molar ratio) | Mixed state |
|---|---|---|
| 1-1 | 2/1 /0.2 | LiBF₄ is precipitated |
| 1-2 | 2/1 /0.4 | LiBF₄ is precipitated |
| 1-3 | 2/1 /0.6 | Single phase |
| 1-4 | 2/1 /0.8 | Single phase |
| 1-5 | 2/1 /1 | Single phase |
| 1-6 | 2/0.8/1 | Single phase |
| 1-7 | 2/0.6/1 | Single phase |
| 1-8 | 2/0.4/1 | TEMA·BF₄ floats |
| 1-9 | 2/0.2/1 | TEMA·BF₄ floats |

In the mixed conditions of the compositions 1-3 to 1-7, the electrolytes of high ion concentrations in a single phase at ordinary temperatures could be prepared. Herein, in the electrolyte having a molar ratio of EC/LiBF₄/TEMA-BF₄=2/1/1, the total salt concentration was 4.2 mol/kg. On the other hand, in the compositions 1-1, 1-2, 1-8 and 1-9, the electrolytes of a single phase could not be prepared at ordinary temperatures. When EC and LiBF₄ were mixed in a molar ratio of EC/LiBF₄=2/1 and when EC and TEMA·BF₄ were mixed in a molar ratio of EC/TEMA·BF₄=2/1, the salts could not be completely dissolved in EC.

### <<Example 4>>

EC as a solvent, LiBF₄ as a lithium salt and TMA (tetramethyl ammonium)·BF₄ as an ammonium salt were mixed at a rate shown in Table 2. The state of the prepared electrolyte is shown in Table 2.

**[Table 2]**

| Composition number | Composition EC/LiBF₄/TMA·BF₄ (molar ratio) | Mixed state |
|---|---|---|
| 2-1 | 6/1 /0.1 | Single phase |

TMA-BF₄ had a very low solubility to EC, and TMA·BF₄ could not be dissolved at a molar ratio of EC/TMA·BF₄=6/1. However, an electrolyte of a high ion concentration in a single phase at ordinary temperatures could be prepared by making LiBF₄ coexist. However, this electrolyte was metastable. A needle-shaped or flaky crystalline substance was deposited by and by at a room temperature, and floated on the upper surface of the electrolyte.

### <<Example 5>>

LiBF₄ and TEMA·BF4 were mixed using non-aqueous solvents shown in Table 3 in a molar ratio of a non-aqueous solvent/LiBF₄/TEMA·BF₄=2/1/1. The mixed state is shown in Table 3.

**[Table 3]**

| Composition number | Non-aqueous solvent | Mixed state |
|---|---|---|
| 3-1 | EC | Single phase |
| 3-2 | PC | Single phase |
| 3-3 | BC | Single phase |
| 3-4 | γ-BL | Single phase |
| 3-5 | EC/DMC=1/1(molar ratio) | Single phase |
| 3-6 | EC/EMC=1/1(molar ratio) | Single phase |
| 3-7 | EC/DEC=1/1(molar ratio) | Single phase |

As a result, as shown in Table 3, there could be prepared electrolytes of a high ion concentration having a single phase in any case.
When the non-aqueous solvent and LiBF₄ were mixed in a molar ratio of the non-aqueous solvent/LiBF₄=2/1 and when the non-aqueous solvent and TEMA·BF₄ were mixed in a molar ratio of the non-aqueous solvent/TEMA·BF₄=2/1, the salts could not be completely dissolved in the solvent in any case.

### <<Example 6>>

EC, LiBF₄ and TBA·BF₄ were mixed in a molar ratio of EC/LiBF₄/TBA·BF₄=3/1/1. As a result, there could be prepared an electrolyte having a total salt concentration of 2.9 mol/kg and having a single phase. It was found that since LiBF₄ was not completely dissolved and precipitated in an insoluble state when EC and LiBF₄ were mixed in a molar ratio of EC/LiBF₄=3/1, LiBF₄ was easily dissolved by the existence of TBA·BF₄.

### <<Example 7>>

EC, LiBF₄ and TMEA·BF₄ were mixed in a molar ratio of EC/LiBF₄/TMEA·BF₄=2/1/1. As a result, there could be prepared an electrolyte having a total salt concentration of 4.5 mol/kg and having a single phase. It was found that since LiBF₄ was not completely dissolved and precipitated in an insoluble state when EC and LiBF₄ were mixed in a molar ratio of EC/LiBF₄=2/1, LiBF₄ was easily dissolved by the existence of TMEA·BF₄.

### <<Example 8>>

EC, LiBF₄ and TMPA·BF₄ were mixed in a molar ratio of EC/LiBF₄/TMPA·BF₄=1/1/1. As a result, there could be prepared an electrolyte having a total salt concentration of 5.4 mol/kg and having a single phase. It was found that since TMPA·BF₄ was not completely dissolved and precipitated in an insoluble state when EC and TMPA·BF₄ were mixed in a molar ratio of EC/TMPA·BF₄=1/1, LiBF₄ and TMPA·BF₄ were easily dissolved by the coexistence of LiBF₄ and TMPA·BF₄.

### <<Example 9>>

There were used EC, DME, EME or DEE as a non-aqueous solvent, LiTFSI as a lithium salt and TEMA·TFSI or TMPA·TFSI as an ammonium salt. As shown in Table 4, the non-aqueous solvent, LiTFSI, the ammonium salt were mixed in a molar ratio of the non-aqueous solvent/LiTFSI/ammonium salt =1/1/1. The mixed state is shown in Table 4.

**[Table 4]**

| Composition number | Composition | Mixed state |
|---|---|---|
| 4-1 | EC /L1TFSI/TEMA·TFSI | Single phase |
| 4-2 | DME/LiTFSI/TEMA·TFSI | Single phase |
| 4-3 | EME/LiTFSI/TEMA·TFSI | Single phase |
| 4-4 | DEE/LiTFSI/TEMA·TFSI | Single phase |
| 4-5 | DME/LiTFSI/TMPA·TFSI | Single phase |

As a result, in any composition, there could be prepared electrolytes of high ion concentrations in a single phase at ordinary temperatures.
When EC and LiTFSI were mixed in a molar ratio of EC/LiTFSI=1/1, LiTFSI could not be completely dissolved in EC. When DME and LiTFSI were mixed in a molar ratio of DME/LiTFSI=1/1 and when EME and LiTFSI were mixed in a molar ratio of EME/LiTFSI=1/1, the mixture became a solid.

### <<Example 10>>

EC, LiClO₄ and TMPA·ClO₄ were mixed in a molar ratio of EC/LiClO₄/TMPA·ClO₄=2/1/1. As a result, there could be prepared an electrolyte having a total salt concentration of 4.1 mol/kg and having a single phase. It was found that since LiClO₄ was not completely dissolved and precipitated in an insoluble state when EC and LiClO₄ were mixed in a molar ratio of EC/LiClO₄=3/1, LiClO₄ was easily dissolved by the existence of TMPA·ClO₄.
Next, there is shown an Example in which lithium ions can be electrochemically absorbed to and released from graphite by using the electrolyte of the present invention.

### <<Example 11>>

An artificial graphite powder was used for a negative electrode material absorbing and releasing lithium ions while charging and discharging, and a negative electrode was produced as follows.
The artificial graphite powder of 75 parts by weight, acetylene black of 20 parts by weight as a conductive material, and a polyvinylidene fluoride resin of 5 parts by weight as a binder were mixed in dehydrated N-methyl-2-pyrrolidone. Next, this mixture was applied onto one surface of a thin copper foil current collector having a thickness of 20 µm, and was then dried to form an active material layer having a thickness of 80 µm. The thin copper film current collector having the active material layer thereon was cut out to a size of 35 mm x 35 mm, and was ultrasonically welded to a copper current collecting plate with a lead having a thickness of 0.5 mm.

There was used a non-aqueous electrolyte prepared by mixing EC, LiTFSI and TEMA·TFSI in a molar ratio of EC/LiTFSI/TEMA·TFSI=4/1/1.
The negative electrode produced above was used for an test electrode, and a thin lithium metal foil was used for a counter electrode and a reference electrode. An attempt was made to electrochemically insert lithium ions into the artificial graphite powder. Referring to the insertion condition, the atmospheric temperature and the current value were respectively set to 20°C and 0.03 mA/cm².

### <<Comparative Example 1>>

There was used a non-aqueous electrolyte prepared by mixing EC, LiTFSI and TEMA·TFSI in a molar ratio of EC/LiTFSI/TEMA·TFSI=6.7/1/1.
An attempt was made to electrochemically insert lithium ions into an artificial graphite powder using the above non-aqueous electrolyte in the same manner as in Example 11.

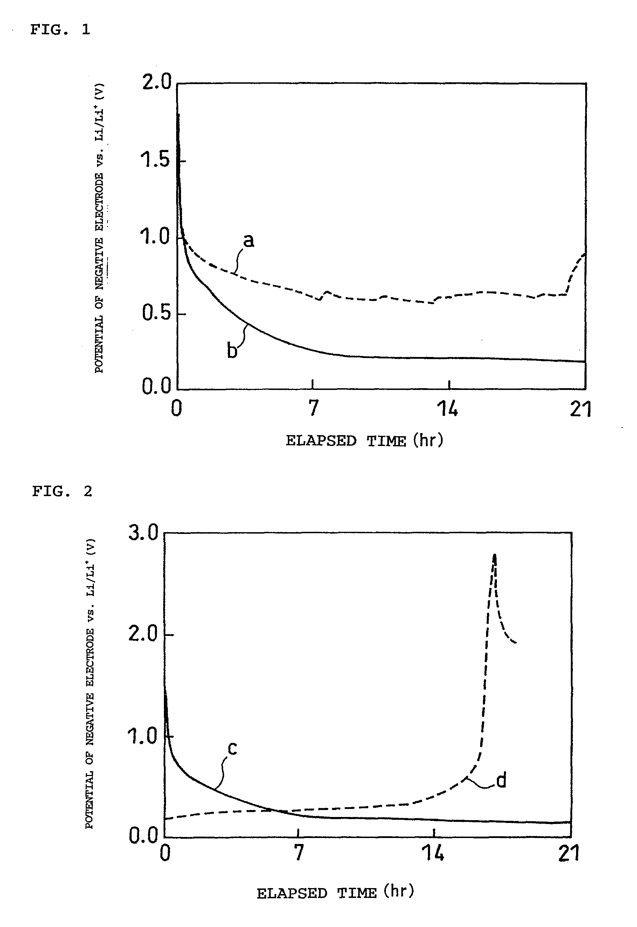

FIG. 1 shows potential variances in passing a quantity of cathodic electricity of 60 mAh/g relative to the artificial graphite powder. In FIG. 1, reference mark "a" designates a charge curve of Comparative Example 1, and reference mark "b" designates a charge curve of Example 11.
In Example 11, it was found that the potential after passing the current was about 0.2 V and lithium ions were inserted between graphite layers to start to form a third stage structure. This third stage structure means a structure where three graphite layers and a lithium ion layer are alternately laminated.

On the other hand, in Comparative Example 1, the potential after passing the current was not reduced to the potential showing the formation of the third stage structure, and the lithium ions could not be inserted.
This is believed that it was because the TEMA ions were free in large quantity in the electrolyte in Comparative Example 1. Since the TEMA ions are smaller than the lithium ions solvated by EC, the TEMA ions are easily inserted between the graphite layers. Therefore, it is presumed that the layered structure of graphite was broken by inserting not the lithium ions but the TEMA ions between the graphite layers.

Therefore, in the electrochemical energy storage device using the graphite material for the negative electrode of the lithium secondary battery or the like, ammonium cations were hardly inserted between the graphite layers by using the non-aqueous electrolyte of a high ion concentration of the present invention, and the lithium ions could be absorbed and released.

### <<Example 12>>

There was used a non-aqueous electrolyte prepared by mixing DME, LiTFSI and TMPA·TFSI in a molar ratio of DME/LiTFSI/TMPA·TFSI=1/1/1.
The above non-aqueous electrolyte was used, and the negative electrode of Example 11 was used for an test electrode. A thin lithium metal foil was used for a counter electrode and a reference electrode. An attempt was made to electrochemically insert and release lithium ions to and from an artificial graphite powder. Referring to the insertion condition, the atmospheric temperature and the current value were respectively set to 20°C and 0.03 mA/cm². A quantity of cathodic electricity passed relative to the artificial graphite powder was set to 60 mAh/g. Referring to the release condition, the atmospheric temperature and the current value were respectively set to 20°C and 0.03 mA/cm².

FIG. 2 shows the potential variance of the negative electrode in passing the cathodic and anodic current to the artificial graphite powder. In FIG. 2, reference mark "c" designates a charge curve, and reference mark "d" designates a discharge curve. The charge curve "c" of FIG. 2 showed that the potential after passing the cathodic current was about 0.2 V and lithium ions were inserted between the graphite layers to form a third stage structure. The discharge curve "d" in FIG. 2 showed that the lithium ions were released from the artificial graphite powder by passing the anodic current.

### <<Example 13>>

There was used a non-aqueous electrolyte prepared by mixing EC, LiBF₄ and TEMA·BF₄ in a molar ratio of EC/LiBF₄/TEMA·BF₄=2/1/1.
The above non-aqueous electrolyte was used, and the negative electrode of Example 11 was used for an test electrode. A thin lithium metal foil was used for a counter electrode and a reference electrode. An attempt was made to electrochemically insert lithium ions to the artificial graphite powder. Referring to the insertion condition, the atmospheric temperature and the current value were respectively set to 20°C and 0.03 mA/cm².

### <<Comparative Example 2>>

There was used a non-aqueous electrolyte prepared by mixing EC, LiBF₄ and TEMA·BF₄ in a molar ratio of EC/LiBF₄/TEMA·BF₄=6.7/1/1.
An attempt was made to electrochemically insert lithium ions to an artificial graphite powder using the above non-aqueous electrolyte in the same manner as in Example 13.

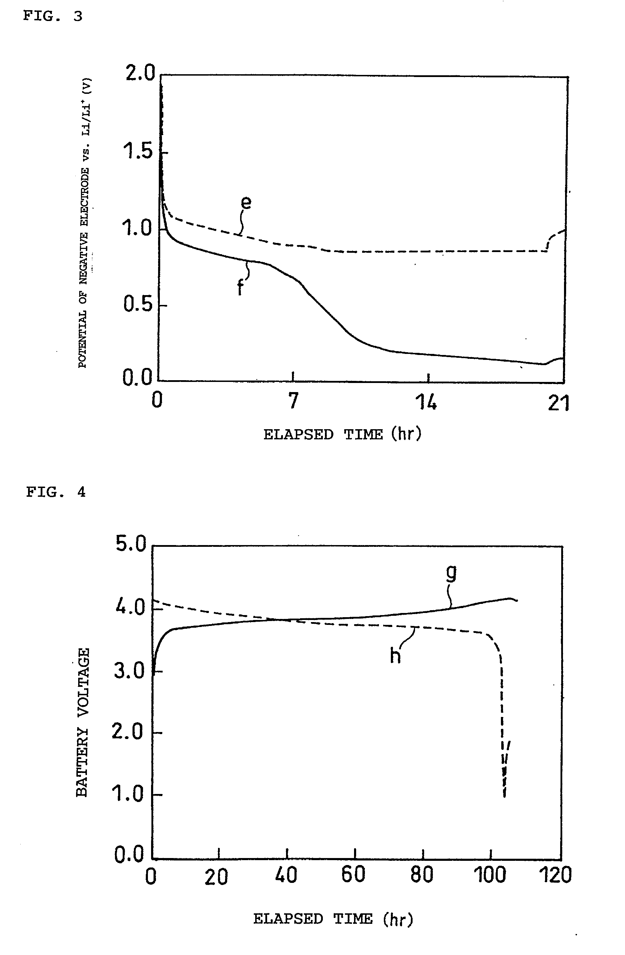

FIG. 3 shows potential variances of the negative electrodes in passing a quantity of cathodic electricity of 60 mAh/g relative to the artificial graphite powder. In FIG. 3, reference mark "e" designates a charge curve of Comparative Example 2, and reference mark "f" designates a charge curve of Example 13. The potential was not reduced for 6 hours after starting to pass the cathodic current in Example 13, and a reaction considered to be the insertion of TEMA ions between the graphite layers occurred. However, the potential was then reduced, and a reaction in which lithium ions were inserted between the graphite layers occurred.

On the other hand, even if the passing current was continued in Comparative Example 2, the potential was not reduced, and the insertion of the lithium ions did not take place. It was probably because TEMA ions were inserted between the graphite layers to break the layered structure of graphite and the decomposition of EC occurred.

### <<Example 14>>

There was used a non-aqueous electrolyte prepared by mixing EC, LiBF₄ and TMPA·BF₄ in a molar ratio of EC/LiBF_{4/}TMPA-BF₄=2/1/1.
The above non-aqueous electrolyte was used, and the negative electrode of Example 11 was used for an test electrode. A thin lithium metal foil was used for a counter electrode and a reference electrode. An attempt was made to electrochemically insert and release lithium ions to and from the artificial graphite powder. Referring to the insertion condition, the atmospheric temperature and the current value were respectively set to 20°C and 0.03 mA/cm². A quantity of cathodic electricity passed relative to the artificial graphite powder was set to 60 mAh/g. Referring to the release condition, the atmospheric temperature and the current value were respectively set to 20°C and 0.03 mA/cm².

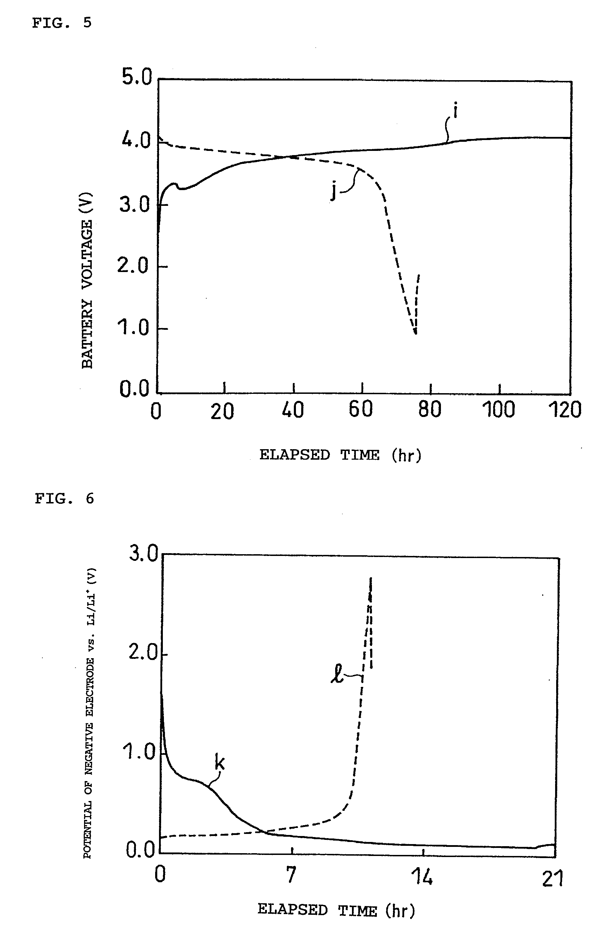

FIG. 6 shows the potential variance of the negative electrode in passing a cathodic and anodic current to the artificial graphite powder. In FIG. 6, reference mark "k" designates a charge curve, and reference mark "1" designates a discharge curve. The charge curve "k" of FIG. 6 showed that the potential after passing the cathodic current was about 0.2 V and lithium ions were inserted between the graphite layers to form a third stage structure. The discharge curve "1" in FIG. 6 showed that the lithium ions were released from the artificial graphite powder by passing the anodic current.

### <<Example 15>>

There was used a non-aqueous electrolyte prepared by mixing EC, LiBF₄ and TMEA-BF₄ in a molar ratio of EC/LiBF₄/TMEA·BF₄=2/1/1.
The above non-aqueous electrolyte was used, and the negative electrode of Example 11 was used for an test electrode. A thin lithium metal foil was used for a counter electrode and a reference electrode. An attempt was made to electrochemically insert and release lithium ions to and from the artificial graphite powder. Referring to the insertion condition, the atmospheric temperature and the current value were respectively set to 20°C and 0.03 mA/cm². A quantity of cathodic electricity passed relative to the artificial graphite powder was set to 60 mAh/g. Referring to the release condition, the atmospheric temperature and the current value were respectively set to 20°C and 0.03 mA/cm².

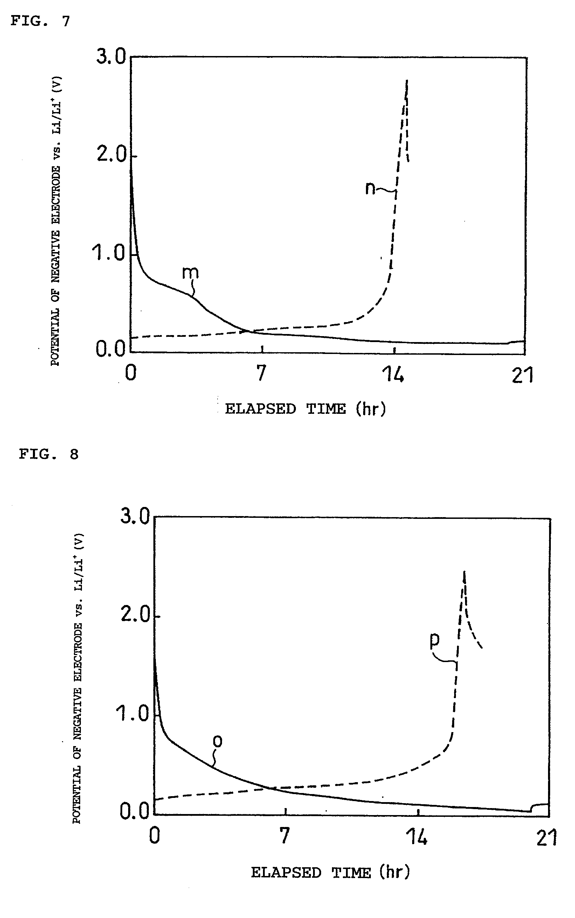

FIG. 7 shows the potential variance of the negative electrode in passing a cathode and anode current to the artificial graphite powder. In FIG. 7, reference mark m designates a charge curve, and reference mark n designates a discharge curve. The charge curve m of FIG. 7 showed that the potential after passing the cathodic current was about 0.2 V and lithium ions were inserted between the graphite layers to form a third stage structure. The discharge curve n in FIG. 7 showed that the lithium ions were released from the artificial graphite powder by passing the anodic current.

The comparison of the charge curve f of FIG. 3, the charge curve k of FIG. 6 and the charge curve m of FIG. 7 showed that a reaction considered to be the insertion of ammonium ions at about 0.8 V between the graphite layers generated after starting the charge was suppressed when the electrolyte contains TMPA·BF₄ and TMEA·BF₄ as compared with TEMA·BF₄ .

### <<Example 16>>

There was used a non-aqueous electrolyte prepared by mixing EC, LiClO₄ and TMPA·ClO₄ in a molar ratio of EC/LiClO₄/TMPA·ClO₄=2/1/1.
The above non-aqueous electrolyte was used, and the negative electrode of Example 11 was used for an test electrode. A thin lithium metal foil was used for a counter electrode and a reference electrode. An attempt was made to electrochemically insert and release lithium ions to and from the artificial graphite powder. Referring to the insertion condition, the atmospheric temperature and the current value were respectively set to 20°C and 0.03 mA/cm². A quantity of cathodic electricity passed relative to the artificial graphite powder was set to 60 mAh/g. Referring to the release condition, the atmospheric temperature and the current value were respectively set to 20°C and 0.03 mA/cm².

FIG. 8 shows the potential variance of the negative electrode in passing the cathodic and anodic current to the artificial graphite powder. In FIG. 8, reference mark "o" designates a charge curve, and reference mark "p" designates a discharge curve. The charge curve "o" of FIG. 8 showed that the potential after passing the cathodic current was about 0.2 V and lithium ions were inserted between the graphite layers to form a third stage structure. The discharge curve "p" in FIG. 8 showed that the lithium ions were released from the artificial graphite powder by passing the anodic current.
Next, there is shown an Example in which a lithium secondary battery was assembled and the battery characteristics were confirmed.

### <<Example 17>>

LiCoO₂ was used as a positive electrode material absorbing and releasing lithium ions while charging and discharging, and a positive electrode was produced as follows.
First, a LiCoO₂ powder of 85 parts by weight, acetylene black of 10 parts by weight as a conductive material, and a polyvinylidene-fluoride resin of 5 parts by weight as a binder were mixed. These were dispersed in dehydrated N-methyl-2-pyrrolidone to prepare a slurry-state positive electrode mixture.
This positive electrode mixture was applied onto a positive electrode current collector composed of a thin aluminum foil. The positive electrode mixture was dried and then rolled to form an active material layer on the positive electrode current collector. The positive electrode current collector having a surface on which the active material layer was formed was cut out to a size of 35 mm x 35 mm, and was ultrasonically welded to an aluminum current collecting plate with a lead having a thickness of 0.5 mm to obtain a positive electrode.

A negative electrode was produced in the same manner as in Example 11 using the artificial graphite powder.
There was used a non-aqueous electrolyte prepared by mixing EC, LiTFSI and TEMA·TFSI in a molar ratio of EC/LiTFSI/TEMA·TFSI=2/1/1.
The positive electrode obtained above and the negative electrode of Example 11 were opposed with each other so as to sandwich a non-woven fabric made of polypropylene, and the positive and negative electrodes were fixed by a tape so as to integrate them. This integrated product was held in a cylindrical aluminum laminate, and one opening part was welded in the lead portions of both the electrodes. The above obtained non-aqueous electrolyte was dropped from the other opening part. The aluminum laminate was degassed at 10 mmHg for 5 seconds, and the other opening part was welded and sealed to obtain a lithium secondary battery.

The lithium secondary battery was charged and discharged on the condition of the atmospheric temperature of 20°C, charge current value of 0.03 mA/cm², discharge current value of 0.03 mA/cm², upper limit voltage of 4.2 V, and lower limit voltage of 1.0 V. FIG. 4 shows the change of the battery voltage in the charge and discharge of the second cycle. In FIG. 4, reference mark g designates a charge curve, and reference mark h designates a discharge curve.

### <<Comparative Example 3>>

A lithium secondary battery was assembled in the same manner as in Example 17.
There was used a non-aqueous electrolyte prepared by mixing EC, LiTFSI and TEMA·TFSI in a molar ratio of EC/LiTFSI/TEMA·TFSI=6.7/1/1.
A lithium secondary battery was produced by the same manner as in Example 17 except that the above non-aqueous electrolyte was used, and discharged and charged in the same manner as in Example 17. FIG. 5 shows the change of the battery voltage in the charge and discharge of the second cycle. In FIG. 5, reference mark "i" designates a charge curve, and reference mark "j" designates a discharge curve.

Even if 120 hours passed after starting the charge in the battery of Comparative Example 3, the battery voltage did not reach 4.2 V and ethylene gas was generated in large quantity inside the battery. This was because TEMA ions were inserted between the layers of the artificial graphite powder which was the negative electrode material, and the graphite structure was broken to continue decomposition of EC.

On the other hand, it was found that the battery voltage of the battery of Example 17 of the present invention reached 4.2V within 110 hours after starting the charge and the battery had a larger discharge capacity than that of the battery of Comparative Example 3.
Therefore, the lithium secondary battery with a high energy density was obtained by using the non-aqueous electrolyte of Example 17 of the present invention.
Next, there is shown an Example in which cyclic carbonate having a C=C unsaturated bond was added into the non-aqueous electrolyte to enhance the characteristics of the lithium secondary battery.

### <<Example 18>>

Two kinds of batteries shown below were produced.
There was used one battery prepared by mixing EC, LiTFSI and TEMA·TFSI in a molar ratio of EC/LiTFSI/TEMA·TFSI=2/1/1 for the electrolyte. A lithium secondary battery 18A was produced in the same manner as in Example 17 except that this non-aqueous electrolyte was used.
There was used the other battery prepared by mixing EC, Vec, LiTFSI and TEMA·TFSI in a molar ratio of EC/Vec/LiTFSI/TEMA·TFSI=1.9/0.1/1/1 for the electrolyte. A lithium secondary battery 18B was produced in the same manner as in Example 11 except that this non-aqueous electrolyte was used.

The batteries 18A and 18B were repeatedly discharged and charged on the same condition as that of Example 17. A value obtained by dividing the discharge capacity of the tenth cycle by the discharge capacity of the second cycle was evaluated as the capacity maintenance rate.
The battery 18A had a capacity maintenance rate of 0.93, and the battery 18B had a capacity maintenance rate of 0.97. It was found that the capacity maintenance rate was enhanced by adding Vec into the non-aqueous electrolyte. Although Vec was used for cyclic carbonate having a C=C unsaturated bond in this Example, the same result is obtained even when a cyclic carbonate or a linear carbonate having the C=C unsaturated bond other than Vec is used.
Next, LiPF₆ was added to the electrolyte, and the characteristics of the lithium secondary battery were investigated.

### <<Example 19>>

Two kinds of lithium secondary batteries shown below were produced.
There was used one battery prepared by mixing EC, LiTFSI and TEMA-TFSI in a molar ratio of EC/LiTFSI/TEMA·TFSI=4/1/1 for the non-aqueous electrolyte. A lithium secondary battery 19A was produced in the same manner as in Example 17 except that this non-aqueous electrolyte was used.

There was used the other battery prepared by mixing EC, LiTFSI, LiPF₆ and TEMA·TFSI in a molar ratio of EC/LiTFSI/LiPF₆/TEMA·TFSI=4/0.9/0.1/1 were used for the non-aqueous electrolyte. A lithium secondary battery 19B was produced in the same manner as in Example 11 except that this non-aqueous electrolyte was used.

The capacity maintenance rates of the batteries 19A and 19B were determined in the same manner as in Example 18.
When the battery 19A passed 5 cycles, the aluminum which was the current collector was corroded and the battery 19A could not be discharged and charged. On the other hand, the capacity maintenance rate of the battery 19B was 0.94.
Therefore, it was found that the capacity maintenance rate was enhanced by adding LiPF₆ into the non-aqueous electrolyte. Although the case where LiPF₆ was added was used in this Example, the same result is obtained even when the other lithium salt is added.
Next, a lithium primary battery was constituted, and the storage characteristics were evaluated.

### <<Example 20>>

The lithium primary battery was assembled in the following procedure.
A positive electrode was produced in the same manner as in Example 17 except that γ/β-MnO₂ was used for a positive electrode material.
A thin lithium metal foil was cut out to a size of 35 mm × 35 mm, and was then pressure-bonded to a copper current collecting plate with a lead having a thickness of 0.5 mm to obtain a negative electrode.
There was used a non-aqueous electrolyte prepared by mixing EC, LiTFSI and TEMA·TFSI in a molar ratio of EC/LiTFSI/TEMA·TFSI=2/1/1.

The positive electrode and the negative electrode were opposed with each other so as to sandwich a porous film made of polyethylene, and the positive and negative electrodes were fixed by a tape so as to integrate them. This integrated product was held in a cylindrical aluminum laminate, and one opening part was welded in the lead portions of both the electrodes. The above obtained non-aqueous electrolyte was dropped from the other opening part. The aluminum laminate was degassed at 10 mmHg for 5 seconds, and the other opening part was sealed by welding to obtain a lithium primary battery.

This lithium primary battery was preliminarily discharged until the molar ratio of Li/Mn was set to 0.05/1 on the condition of the atmospheric temperature of 20°C and current value of 0.03 mA/cm². The battery was then stored at 60°C for one month, and the change of the internal impedance before and after the storage was investigated. As a result of measuring the resistance at 10 kHz, the internal impedance before the storage was 2.6 Ω. However, the internal impedance after the storage was 2.9 Ω.

### <<Comparative Example 4>>

There was used a non-aqueous electrolyte prepared by mixing EC, LiTFSI and TEMA·TFSI in a molar ratio of EC/LiTFSI/TEMA·TFSI=6.7/1/1. A lithium primary battery was produced in the same manner as in Example 20 except that this non-aqueous electrolyte was used, and a change of internal impedance before and after the storage was investigated.

As a result of measuring the resistance at 10 kHz, the internal impedance before the storage was 2.2 Ω. However, the internal impedance after the storage was 5.6 Ω. The internal impedance of the battery of Comparative Example 4 was increased by 1.9 times as compared with the battery of Example 20. It was probably because MnO₂ was dissolved by EC existing in large quantity in the electrolyte of Comparative Example 4 and a coating film having high resistance was formed on the lithium metal of the negative electrode.
Next, a hybrid capacitor using a polarizable electrode used in a capacitor for the positive electrode and a graphite electrode used in the lithium secondary battery for the negative electrode was evaluated.

### <<Example 21>>

A polarizable electrode was produced in the procedure shown below.
Activated carbon powder obtained from phenol resin and having a specific surface area of 1700 m²/g, acetylene black as a conductive material, an ammonium salt of carboxymethyl cellulose as a binder, and water and methanol as a dispersion medium were mixed at a weight ratio of 10:2:1:100:40. This mixture was applied onto one surface of a thin aluminum foil current collector having a thickness of 20 µm, and was then dried to form an active material layer having a thickness of 80 µm. This was cut out to a size of 35 mm x 35 mm, and was then ultrasonically welded to an aluminum current collecting plate with a lead having a thickness of 0.5 mm.

A product prepared by opposing the polarizable electrode obtained above as the positive electrode and the negative electrode of Example 11 so as to sandwich a separator composed of a non-woven fabric made of polypropylene was held in an aluminum laminate tube to produce a hybrid capacitor.
There was used a non-aqueous electrolyte prepared by mixing EC, LiTFSI and TEMA·TFSI in a molar ratio of EC/LiTFSI/TEMA·TFSI=4/1/1.

The assembled hybrid capacitor was repeatedly discharged and charged in a voltage range of 2.0 to 3.8 V at atmospheric temperature of 20°C and current value of 0.3 mA/cm², and a change of discharge capacity accompanying the charge and discharge cycle was investigated. The capacity maintenance rate obtained by dividing the capacity after 1000 cycles by the capacity of the tenth cycle was 0.91.

### <<Comparative Example 5>>

There was used a non-aqueous electrolyte prepared by mixing EC, LiBF₄ and N,N-diethyl-N-methyl-N-(2-methoxyethyl)ammonium-bis [trifluoromethane sulfonyl]imide (hereinafter, abbreviated as DEME·BF₄) in a molar ratio of EC/LiBF₄/DEME·BF₄=4/1/1. A hybrid capacitor was assembled in the same manner as in Example 21 except that this non-aqueous electrolyte was used, and a change of capacity was investigated.

As a result, the capacity of the capacitor was became about 0 after 200 cycles. This is presumed to be that the positive electrode which was the polarizable electrode was in an overcharged state since the potential of the negative electrode did not become lower while charging, and the electrolyte was oxidized and decomposed.
Therefore, a hybrid capacitor having a long cycle life can be obtained by using the electrolyte of the present invention.
Next, an electric double layer capacitor using the polarizable electrode for the positive electrode and the negative electrode was evaluated.

### <<Example 22>>

A polarizable electrode was produced in the same procedure as that of Example 21.
A product prepared by opposing the two polarizable electrodes with each other so as to sandwich a separator composed of a non-woven fabric made of polypropylene was held in an aluminum laminate tube to produce an electric double layer capacitor.
There was used a non-aqueous electrolyte prepared by mixing EC, LiClO₄ and TMPA·ClO₄ in a molar ratio of EC/LiClO₄/TEMA·ClO₄=2/1/1.
The assembled electric double layer capacitor was discharged and charged in a voltage range of 2.0 to 3.2 V at atmospheric temperature of 20°C and current value of 0.3 mA/cm². The charge and discharge efficiency of the capacitor after 20 cycles was about 96 %. The charge and discharge efficiency is a percentage of the discharge capacity to the charge capacity in the 20th cycle.

### <<Comparative Example 6>>

There was used a non-aqueous electrolyte prepared by mixing EC, LiBF₄ and DEME·BF₄ in a molar ratio of EC/LiBF₄/DEME·BF₄=4/1/1. The electric double layer capacitor was assembled in the same manner as in Example 22 except that this non-aqueous electrolyte was used, and the charge and discharge efficiency was measured in the same manner as in Example 22.
As a result, the charge and discharge efficiency after 20 cycles were 67 %. This is presumed that the positive electrode which was the polarizable electrode was in an overcharged state for the same reason as that of Comparative Example 5 and the electrolyte was oxidized and decomposed.
Therefore, even if the charge and discharge cycle is performed at a high voltage by using the electrolyte of the present invention, an electric double layer capacitor having a high charge and discharge efficiency can be obtained.

### Industrial Applicability

The non-aqueous electrolyte of the present invention is suitably used for the electrochemical energy storage devices such as the lithium secondary battery, the lithium primary battery, the hybrid capacitor and the electric double layer capacitor.

## Claims

1. A non-aqueous electrolyte comprising:
a lithium salt (A);
a quaternary ammonium salt (B) containing a straight chain alkyl group having carbon atoms of 4 or less; and
a solvent (C) composed of at least one selected from the group consisting of ethylene carbonate, propylene carbonate, butylene carbonate, γ-butyrolactone, dimethyl carbonate, ethyl methyl carbonate, diethyl carbonate, dimethoxyethane, ethoxymethoxyethane and diethoxyethane,
wherein a molar ratio C/A of said solvent (C) to said lithium salt (A) or a molar ratio C/B of said solvent (C) to said ammonium salt (B) is 6 or less, and said non-aqueous electrolyte is a single phase.

2. The non-aqueous electrolyte in accordance with claim 1, wherein the molar ratio C/A of said solvent (C) to said lithium salt (A) or the molar ratio C/B of said solvent (C) to said ammonium salt (B) is 4 or less.

3. The non-aqueous electrolyte in accordance with claim 1 or 2, wherein an anion of said lithium salt (A) is at least one selected from the group consisting of BF₄⁻, bis[trifluoromethane sulfonyl]imide ion and ClO₄⁻.

4. The non-aqueous electrolyte in accordance with claim 1 or 2, wherein an anion of said ammonium salt (B) is at least one selected from the group consisting of BF₄⁻, bis[trifluoromethane sulfonyl]imide ion and ClO₄⁻.

5. The non-aqueous electrolyte in accordance with any of claims 1 to 4, wherein a cation of said ammonium salt (B) is trimethylpropylammonium ion.

6. An electrochemical energy storage device comprising:
the non-aqueous electrolyte in accordance with any of claims 1 to 5;
a positive electrode; and
a negative electrode.
